# EUROPEAN PATENT SPECIFICATION

(11) **EP 4 251 774 B1**
(45) Date of publication and mention of the grant of the patent: **01.10.2025**
(21) Application number: 21816560.3
(22) Date of filing: 24.11.2021
(51) Int. Cl.: C21B 13/00, C21B 13/02, C25B 1/04, F27D 3/10, F27D 99/00, C25B 15/08, F27B 1/00, F27B 1/16

(54) **PROCESS FOR THE PRODUCTION OF CARBURIZED SPONGE IRON**
VERFAHREN ZUR HERSTELLUNG VON AUFGEKOHLTEM EISENSCHWAMM
PROCÉDÉ DE PRODUCTION DE FER SPONGIEUX CÉMENTÉ

(30) Priority: 25.11.2020 SE 2051376
(43) Date of publication of application: 04.10.2023
(73) Proprietor: HYBRIT Development AB, 111 64 Stockholm (SE)
(72) Inventor: MOHSENI-MÖRNER, Farzad, 163 55 Spånga (SE); FAYAZI, Javad, 169 72 Solna (SE)
(74) Representative: Zacco Sweden AB
(86) International application number: PCT/SE2021/051173
(87) International publication number: WO 2022/115024

(56) References cited:
- CN-A- 111 270 036
- DE-U1- 202020 100 640
- US-A- 4 111 687
- US-A1- 2009 013 828
- US-A1- 2015 259 760
- DANKWAH JAMES RANSFORD ET AL: "RECYCLING BLENDS OF WASTE PLASTICS AND BIOMASS AS REDUCING AGENT FOR THE PRODUCTION OF METALLIC IRON FROM IRON OXIDE", INTERNATIONAL JOURNAL OF ENGINEERING SCIENCE AND TECHNOLOGY, 31 December 2013 (2013-12-31), pages 1967 - 1976, XP093185010, Retrieved from the Internet <URL:https://www.researchgate.net/publication/260289883_Recycling_Blends_of_Waste_Plastics_and_Biomass_as_Reducing_Agent_for_the_Production_of_Metallic_Iron_from_Iron_Oxide/fulltext/57aac63408ae0932c96f4119/Recycling-Blends-of-Waste-Plastics-and-Biomass-as-Reducing-Agent-for-the-Production-of-Metallic-Ir> [retrieved on 20240712]

## Description

### TECHNICAL FIELD

The present disclosure relates to a process for the production of carburized sponge iron. The disclosure further relates to a system for the production of carburized sponge iron and a carburized sponge iron produced by the aforementioned process.

### BACKGROUND ART

Steel is the world's most important engineering and construction material. It is difficult to find any object in the modern world that does not contain steel, or depend on steel for its manufacture and/or transport. In this manner, steel is intricately involved in almost every aspect of our modern lives.

In 2018, the total global production of crude steel was 1 810 million tonnes, by far exceeding any other metal, and is expected to reach 2 800 million tonnes in 2050 of which 50% is expected to originate from virgin iron sources. Steel is also the world's most recycled material with a very high recycling grade due to the metals' ability to be used over and over again after remelting, using electricity as the primary energy source.

Thus, steel is a cornerstone of modern society with an even more significant role to play in the future.

Steel is mainly produced via three routes:
i) Integrated production using virgin iron ores in a blast furnace (BF), where iron oxide in the ore is reduced by carbon to produce iron. The iron is further processed in the steel plant by oxygen blowing in a basic oxygen furnace (BOF), followed by refining to produce steel. This process is commonly also referred to as 'oxygen steelmaking'.
ii) Scrap-based production using recycled steel, which is melted in an electric arc furnace (EAF) using electricity as the primary source of energy. This process is commonly also referred to as 'electric steelmaking'.
iii) Direct reduction production based on virgin iron ore, which is reduced in a direct reduction (DR) process with a carbonaceous reducing gas to produce sponge iron. The sponge iron is subsequently melted together with scrap in an EAF to produce steel.

The term crude iron is used herein to denote all irons produced for further processing to steel, regardless of whether they are obtained from a blast furnace (i.e. pig iron), or a direct reduction shaft (i.e. sponge iron).

Although the above-named processes have been refined over decades and are approaching the theoretical minimum energy consumption, there is one fundamental issue not yet resolved. Reduction of iron ore using carbonaceous reductants results in the production of CO2 as a by-product. For every ton steel produced in 2018, an average of 1.83 tonnes of CO2 were produced. The steel industry is one of the highest CO2-emitting industries, accounting for approximately 7% of CO2 emissions globally. Excessive CO2-generation cannot be avoided within the steel production process as long as carbonaceous reductants are used.

The HYBRIT initiative has been founded to address this issue. HYBRIT, short for HYdrogen BReakthrough Ironmaking Technology - is a joint venture between SSAB, LKAB and Vattenfall, funded in part by the Swedish Energy Agency, and aims to reduce CO2 emissions and decarbonize the steel industry.

Central to the HYBRIT concept is a direct reduction based production of sponge iron from virgin ore. However, instead of using carbonaceous reductant gases, such as natural gas, as in present commercial direct reduction processes, HYBRIT proposes using hydrogen gas as the reductant, termed hydrogen direct reduction (H-DR). The hydrogen gas may be produced by electrolysis of water using mainly fossil-free and/or renewable primary energy sources, as is the case for e.g. Swedish electricity production. Thus, the critical step of reducing the iron ore may be achieved without requiring fossil fuel as an input, and with water as a by-product instead of CO2. The resulting crude iron will naturally also be lacking in carbon.

Iron produced by present-day commercial blast furnace or direct reduction routes typically comprises significant amounts of carbon (typically up to 5 wt%), due to carbon incorporation during reduction of the iron ore. Besides its use as a reducing agent, carbon plays further important roles in the steel-making process. Its presence in the crude iron from the BF or DR process lowers the melting point of the iron. During subsequent processing of the crude iron in an EAF or BOF, the exothermic dissociation of iron carbide and oxidation of carbon to CO supplies heat to the process. The gas evolution in the EAF due to this CO production provides a foamy slag that assists in thermally insulating the iron melt and helps diminish consumption of the EAF electrodes. For at least these reasons, the presence of carbon in the crude iron may assist in reducing energy consumption during processing to steel. The presence of carbon in the melt may also influence slag-metal reaction kinetics, and assist in purging dissolved gaseous elements from the metal. Moreover, the presence of carbon in direct reduced iron passivizes the sponge iron and enables simpler handling and transport. Finally, since the steel industry has a heritage and established practice with respect to carbon-containing crude iron, there may simply be a degree of reluctance among some steelmakers to adopt the use of carbon-lean crude iron, regardless of any benefits.

For at least these reasons, it may be desirable to provide a crude iron produced using substantially fossil-free means, but still containing carbon to an extent that it may be used as a drop-in replacement for present-day crude iron.

Document US 2015/0259760 A1 describes a method for producing steel in which iron ore is reduced with hydrogen and the resulting intermediate product of reduced iron ore and possibly accompanying substances is subjected to further metallurgical processing. In reducing the iron ore to produce the intermediate product, a carbon-containing or hydrogen-containing gas is added to the hydrogen in order to incorporate carbon into the intermediate product. Examples of the carbon-containing or hydrogen-containing gas include CH₄, coke oven gas (COG), synthesis gas, natural gas, biogas, gas from pyrolysis, and renewable resources. Patent documents DE 20 2020 100640 U1, CN 111 270 036 A and US 2009(013828 A1 further disclose a method for the production of carburized sponge iron.

There remains a need for a means of producing a carbon-containing crude iron in a more environmentally friendly manner.

### SUMMARY OF THE INVENTION

The inventors of the present invention have identified a number of shortcomings with prior art means of providing a carbon-containing crude iron.

Present-day commercial processes require extensive use of carbonaceous fossil fuels such as coal or natural gas, leading to excessive net CO2 emissions. Even in proposed processes to address such issues, a substantial proportion of the carbon-containing gas will still be oxidized to CO2 by contact with the ore. This will be the case irrespective of whether the carbon-containing gas is from a renewable source, or whether fossil fuels are used in compensating for fluctuations in renewable hydrogen availability, as envisaged in the prior art.

It would be advantageous to achieve a means of overcoming, or at least alleviating, at least some of the above mentioned shortcomings. In particular, it would be desirable to provide a means of producing a crude iron containing carbon having lower net emissions of CO2. To better address one or more of these concerns, a process for the production of carburized sponge iron having the features defined in the appended independent claims is provided.

The process comprises the steps of:
- charging iron ore into a direct reduction shaft, whereby a seal gas is introduced into the direct reduction shaft in conjunction with charging the iron ore; and/or discharging carburized sponge iron (208) from the direct reduction shaft (211), whereby a seal gas (223) is introduced into the direct reduction shaft in conjunction discharging the carburized sponge iron;
- removing a top gas from the direct reduction shaft;
- recycling a proportion of the top gas and mixing with a make-up gas to form a reducing gas; and
- introducing the reducing gas into the direct reduction shaft in countercurrent flow to the iron ore in order to reduce the iron ore and produce carburized sponge iron.

The seal gas consists essentially of carbon dioxide, and the make-up gas comprises greater than 80 vol% hydrogen gas.

When charging iron ore to a direct reduction shaft, and/or discharging the sponge iron that is produced in the direct reduction shaft, some seal gas is inevitably introduced into the shaft when charging and/or discharging using means common in the art. The present invention utilizes seal gas consisting essentially of carbon dioxide. The carbon dioxide introduced as seal gas to the process will ultimately result in carburization of the sponge iron, meaning that the need for further carburizing gasses is decreased or avoided completely. Without wishing to be bound by theory, the CO2 introduced as seal gas into the direct reduction shaft will form a component part of the process gases, together with H2 introduced as make-up gas in the process. The CO2 and H2 may react by reverse water-gas shift reaction to form CO and H2O. The CO in turn may react to provide carburization of the sponge iron produced in the direct reduction process. The iron-catalysed reaction of hydrogen and carbon dioxide to ultimately provide carbon and steam is commonly termed the Bosch reaction. Alternatively, the CO2 and H2 may react to form methane by the Sabatier reaction, and this methane may in turn carburize the sponge iron. In these manners, CO2 introduced into the process is converted into CO or CH4, which are removed by carburization. The overall result is the production of a carburized sponge iron with a net consumption of CO2.

A further advantage of the process is that CO2 as seal gas replaces the use of other inert gases typically used as seal gas, such as nitrogen. The use of other inert gases typically results in accumulation of the inert gas in the process gas, meaning that a proportion of the top gas must be disposed of, e.g. by flaring, in order to maintain a suitably reducing gas. This is undesirable both from an environmental and from an economic perspective. However, in the present case, since the CO2 as seal gas is passively removed from the process gases by carburization of the sponge iron, there is no accumulation of seal gas and thus no need to dispose of top gas in order to maintain a suitably reducing gas.

The hydrogen of the make-up gas is produced by electrolysis of water.

The make-up gas may comprise greater than 90 vol% hydrogen gas, such as greater than 95 vol% hydrogen gas.

The make-up gas may consist essentially of hydrogen. Thus, a carburized sponge iron may be obtained using only the carbon dioxide introduced as seal gas to provide carburization.

Alternatively, the make-up gas may consist essentially of hydrogen and carbon dioxide. Thus, a carburized sponge iron may be obtained using only carbon dioxide to provide carburization, without utilizing any typical carburizing gas whatsoever.

Alternatively, the make-up gas may consist essentially of hydrogen, auxiliary carburizing gas, and optionally carbon dioxide. In such a case, the auxiliary carburizing gas may be derived from a renewable source. The high utilization of the carbon present in the carburizing gas may permit use of renewable carburizing gases, despite their relative scarcity and high cost as compared to fossil equivalents.

The recycled top gas may not be passed through an external reformer. That is to say that under the conditions prevailing for hydrogen direct-reduction, the water-gas shift reaction may proceed in the process gas without the need of an external reformer, and use of an external reformer may therefore not required.

The process may not require the flaring of top gas. Since the carbon dioxide seal gas introduced into the process gas is ultimately consumed due to carburization, there may be less accumulation of seal gas in the process gas, and therefore there may be less or no need to flare the top gas in order to prevent seal gas accumulation.

The carbon dioxide used in the process may in part of fully be obtained as a by-product of biofuel production. Thus, only carbon from renewable sources may be used in the process.

Alternatively, the carbon dioxide may be produced by oxy-fuel combustion of biomass with oxygen. This means that both heating of the process gases and the carbon dioxide used in the process may be fully or partially derived from renewables. The oxygen used in oxy-fuel combustion may be produced by electrolysis of water, meaning that both the hydrogen and oxygen produced in electrolysis are utilized and potentially reducing the cost of oxy-fuel combustion.

Recycling a proportion of the top gas may comprise steps of removing water and dust from the top gas.

The process may further comprise the steps:
- transferring the carburized sponge iron to a carburization unit; and
- further carburizing the carburized sponge iron in the carburization unit using a carburizing gas to provide a further carburized sponge iron.

Further carburizing the sponge iron in a separate carburization unit permits effective use of the carbon in the carburizing gas, with a greater proportion of carbon incorporated into the sponge iron and a lesser proportion oxidized to CO2. Moreover, performing a further carburization stage separately may allow beneficial control of the water-gas shift equilibrium in the reduction shaft.

The direct reduction shaft operates at a pressure of greater than 2 Bar. In such a case, the seal gas and the iron ore is introduced into the direct reduction shaft via a pressurizable charge hopper arranged at an inlet of the direct reduction shaft.

Alternatively, the direct reduction shaft may operate at a pressure of 2 Bar or less (non-claimed). In such a case, the seal gas and the iron ore may be introduced into the direct reduction shaft via a seal leg arranged at an inlet of the direct reduction shaft.

According to another aspect of the invention, the objects of the invention are achieved by a system for the production of carburized sponge iron according to the appended independent claims. The production process may be a process as defined in the appended independent claims, and the carburized sponge iron may be a carburized sponge iron as defined in the appended independent claims.

The system for the production of carburized sponge iron comprises:
- an electrolyser arranged to produce hydrogen from the electrolysis of water;
- a direct reduction shaft;
- an iron ore charging arrangement;
- a carburized sponge iron discharging arrangement; and
- a source of carbon dioxide.

The source of carbon dioxide is arranged in fluid connection with the iron ore charging arrangement, or the source of carbon dioxide is arranged in fluid connection with the carburized sponge iron discharging arrangement. A source of carbon dioxide may be arranged in fluid connection with both the iron ore charging arrangement and the carburized sponge iron discharging arrangement.

The electrolyser may be arranged in fluid communication with the direct reduction shaft, such that hydrogen produced by the electrolyser may be conveyed to the direct reduction shaft. This may preferably be an indirect fluid communication via treatment of the electrolysis gases and/or via a hydrogen storage facility.

The iron ore charging arrangement may be arranged to convey material, such as iron ore, into an inlet end of the direct reduction shaft.

Since the CO2 is at least partially consumed in carburization, the system may not require a reformer for reforming of CO2. Nor may the system require a device for CO2 capture. The system therefore is considerably simpler than systems requiring reforming or removal of CO2.

The iron ore charging arrangement comprises a pressurizable charge hopper. In such a case, the pressurizable charge hopper comprises a seal gas inlet, wherein the seal gas inlet is arranged in fluid connection with the source of carbon dioxide.

Alternatively, the iron ore charging arrangement may comprise an ore bin and a seal leg (non-claimed). In such a case, the seal leg may comprise a seal gas inlet, wherein the seal gas inlet is arranged in fluid connection with the source of carbon dioxide.

According to a further aspect of the invention, the object of the invention is achieved by a carburized sponge iron (non-claimed). The carburized sponge iron may be produced by a process according to the appended independent claims. The carburized sponge iron has a degree of reduction greater than 90%, such as greater than 94%, and comprises from 0.1 to 5 percent carbon by weight, such as from 0.5 to 3 percent carbon by weight such as about 1 to 2 percent carbon by weight. The carburized sponge iron has a radiocarbon age of less than 10 000 years before present, preferably less than 1000 years before present, even more preferably less than 100 years before present. This means that the carburized sponge iron must have been carburized using a carbon dioxide containing a significant renewable carbon content, which as described herein is commercially feasible using the process described herein.

The carburized sponge iron may be in the form of pellets (i.e. DRI) or briquettes (i.e. HBI).

Further objects, advantages and novel features of the present invention will become apparent to one skilled in the art from the following detailed description.

### BRIEF DESCRIPTION OF THE DRAWINGS

For a fuller understanding of the present invention and further objects and advantages of it, the detailed description set out below should be read together with the accompanying drawings, in which the same reference notations denote similar items in the various diagrams, and in which:
- Fig. 1: schematically illustrates an ore-based steelmaking value chain according to the Hybrit concept;
- Fig. 2a: schematically illustrates an exemplifying embodiment of a system suitable for performing a process as disclosed herein;
- Fig. 2b: schematically illustrates another exemplifying embodiment (non-claimed) of a system suitable for performing a process as disclosed herein;
- Fig. 3: is a flow chart schematically illustrating an exemplifying embodiment of a process as disclosed herein;
- Fig. 4a: schematically illustrates a calculated equilibrium established from an input gas mixture;
- Fig. 4b: schematically illustrates an enlargement of a proportion of the calculated equilibrium of Figure 4a.

### DETAILED DESCRIPTION

The present invention is based upon a number of insights by the inventors. The inventors have recognised that in a process that utilizes hydrogen as the main component of the reducing gas, carbon dioxide will be removed from the process gas by carburization of the sponge iron. This stands in contrast to typical (fossil) carbon-based reducing systems where CO2 is accumulated in the process gas and must be removed and/or reformed. The inventors have further recognised that the relative inertness of CO2 means that it can be introduced to the process as seal gas, thus replacing the inert gases typically used as seal gas. In doing so, a wide range of advantages are obtained, as is described herein.

The term process gas is used herein to denote the gas mixture in the direct reduction process, regardless of stage in the process. That is to say that process gas refers to gas that is introduced to, passes through, leaves, and is recycled back to the direct reduction shaft. More specific terms are used to denote the process gas at various points in the process, or to denote component gases added to the process gas to form part of the process gas. Reducing gas is a gas introduced at a point lower than the inlet of the shaft, and which flows upwards counter to the moving bed of ore in order to reduce and/or carburize the ore. Top gas is partially spent process gas that is removed from an upper end of the shaft, in proximity to the ore inlet. After treatment, the top gas is recycled back to the direct reduction shaft as a component of the reducing gas. Make-up gas is fresh gas added to the reducing gas in order to maintain reducing ability. Thus, the reducing gas comprises make-up gas together with recycled top gas. The make-up gas and recycled top gas may be mixed together prior to introduction into the direct reduction shaft, or may be introduced separately and mixed in the shaft. Seal gas is gas entering the direct reduction shaft from the ore charging arrangement at the inlet of the direct reduction shaft. The outlet end of the direct reduction shaft is also sealed using a seal gas, and seal gas therefore may enter the DR shaft from the discharging arrangement at the outlet of the direct reduction shaft, albeit typically in lesser amounts. The present invention is therefore equally applicable using seal gas introduced during discharge of sponge iron from the direct reduction shaft.

### Seal gas

In a direct reduction shaft, a charge of iron ore must be safely introduced to the shaft. Since the process gases passing through the shaft are highly combustible (typically comprising hydrogen, carbon monoxide and hydrocarbons), it is essential that the formation of explosive air/process gas mixtures are avoided when introducing ore to the shaft. This is typically achieved by ensuring that only an inert seal gas, and not air, is introduced to the shaft when charging ore, and that no process gas escapes the shaft from the charging arrangement. Exactly how this is achieved depends on the operating pressure of the direct reduction shaft.

Typically in DR shafts operating at low pressure (e.g. ≤ 2 Bar), such as the Midrex process, a dynamic gas seal is arranged at a seal leg connecting an ore charge hopper to the direct reduction shaft. Seal gas is introduced at a pressure exceeding the operating pressure of the DR shaft at one or more points in the seal leg. This higher-pressure seal gas prevents air from being introduced into the DR shaft with the iron ore charge, as well as preventing process gas from escaping the DR shaft through the seal leg.

Typically in DR shafts operating at higher pressures (e.g. > 2 Bar), such as the Hyl ZR process, a pressurizable charge hopper is arranged at the inlet to the direct reduction shaft. Ore is charged to the pressurizable hopper, which is then first flushed with the inert seal gas to exclude air, then pressurized to approximately the operating pressure of the DR shaft using the seal gas. Once pressurized, the valve separating the charge hopper and DR shaft is opened to allow the iron ore charge to be introduced to the shaft, together with seal gas. Once the charge hopper is emptied of ore, the charge hopper is resealed and flushed again with seal gas to evacuate process gases from the hopper. Finally, the charge hopper can be opened to the atmosphere and refilled with ore. Typically, several pressurizable charge hoppers, such as 4 charge hoppers, are arranged in parallel to supply ore to the DR shaft.

It should be noted that seal gas is also utilized when discharging a reduced sponge iron product from the outlet of the direct reduction shaft, and may typically also be introduced into the shaft at this point. However, the amount of seal gas introduced at the outlet is typically small compared to the amount introduced at the inlet.

Regardless of the technique used for charging of ore, seal gas is inevitably introduced into the process gas. As described above, the seal gases typically used, such as nitrogen, must be inert (i.e. not form explosive mixtures with process gas), and therefore are retained in the process gas. However, the other components of the process gas are typically either consumed by reaction (e.g. H₂, CO, CH₄) or removed from circulation (e.g. H₂O, CO₂). This means that seal gas would gradually accumulate in the process gas and comprise an ever-increasing proportion if no action was taken. The final result would be a process gas having diminished ability to reduce the ore. In order to avoid such a situation, a proportion of the process gas is typically removed from circulation (as top gas) and flared in order to maintain a suitable concentration of inert components in the process gas. This is at the very least economically deleterious, and depending on the source of the process gas (e.g. fossil fuels), may also be of negative environmental consequence.

In the present process however, carbon dioxide is used as the seal gas. As will be described below, under the conditions prevailing in a hydrogen-based direct reduction, the carbondioxide participates in carburizing the sponge iron produced in the direct reduction shaft, and is passively removed from the process gas. This has several advantages. A carburized sponge iron product is obtained with low concomitant CO₂ emission. Depending on the source of carbon dioxide used, the overall CO₂ emission may be near-zero, or even negative. Because the carbon dioxide seal gas is passively removed to a significant extent from the process gas, there is not necessarily any over-accumulation of the seal gas in the process gas. This means that there may be no need to dispose of top gas in order to control inert gas levels in the process gas. Nor may there be any need for any discrete apparatus to remove or convert the carbon dioxide, such as an external reformer or carbon capture apparatus. A further advantage is that the cost of producing seal gas may be lowered, as the nitrogen typically used in seal gas is typically produced by a costly air separation unit.

In order to ensure that sufficient carbon dioxide is introduced into the process, more seal gas than is strictly necessary for sealing purposes may be introduced into the process gas. For example, seal gas may be introduced at higher pressures in the seal leg or pressurizable charge hopper. The pressurizable charge hopper arrangement may also be constructed to allow a continuous (leakage) flow of carbon dioxide to the process gas, even between charging of iron ore burden to the shaft.

### Carburization using CO₂

Adding carbon dioxide to a hydrogen-based direct-reduction process will, as stated above, result in ultimate removal of the carbon from the process gas by carburization of sponge iron. Without wishing to be bound by theory, it is thought that the carbon dioxide will initially be converted to carbon monoxide in the hydrogen-rich process gas by the reverse water-gas shift reaction.

The reverse water-gas shift reaction is as follows:

CO₂ + H₂ 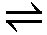

CO + H₂O

In a prior art syngas-based process, significant quantities of both hydrogen and carbonaceous gases (CO, CO₂) are already present. This means introduction of small additional quantities of carbon dioxide as seal gas would not significantly shift any equilibrium. However, in a hydrogen-based direct reduction process, any CO₂ introduced to the process gas will be converted more-or-less quantitatively to CO at the elevated temperatures prevailing in the direct reduction shaft. A number of further factors also dictate that conversion of CO₂ to CO will be favoured. Iron-based catalysts such as iron oxides (e.g. magnetite) are known to catalyse the water-gas shift reaction, meaning that the reaction will be catalysed by the ironcontaining reactants and/or products of direct reduction, and no external reformer will be necessary. Water is continually removed from the top gas of the direct reduction process, thus enhancing production of CO by Le Chatelier's principle. The reverse WGS reaction is endothermic, meaning that, again by Le Chatelier's principle, the equilibrium is shifted towards CO by high temperatures. Finally, as described below, the carbon monoxide produced will be continuously removed from the process gas by carburization reactions, further enhancing the conversion of CO₂ to CO.

Once formed, the carbon monoxide may partake in a range of further reactions, some of which are shown below.

### Methanation

| | |
|---|---|
| CO + 3H2 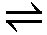 CH4 + H20 | -205.9 kJ/mol |
| 2CO +2H2 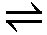 CH4 + CO2 | -247.1 kJ/mol |

### Reduction

| | |
|---|---|
| 3Fe2O3 (hematite) + CO 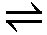 2Fe3O4 + CO2 | -24.9 kJ/mol |
| 2Fe3O4 (magnetite) + 2CO 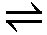 6FeO + 2CO2 | +45.3 kJ/mol |
| 6FeO (wüstite) + 6CO 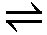 6Fe + 6CO2 | -75.8 kJ/mol |

### Carburization (graphite production)

| | |
|---|---|
| 2CO 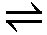 CO2 + C | -173.7 kJ/mol |
| CO + H2 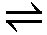 C + H2O | -131.8 kJ/mol |
| CH4 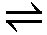 C + 2H2 | +74.5 kJ/mol |

### Carburization (cementite production)

| | |
|---|---|
| 3Fe + CH4 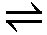 Fe3C +2H2 | +98.3 kJ/mol |
| 3Fe +2CO 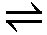 Fe3C + CO2 | -148.8 kJ/mol |
| 3Fe + CO + H2 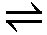 Fe3C + H2O | -107.6 kJ/mol |

Hydrogen also provides reduction of the iron ore by the following reactions:

| | |
|---|---|
| 6Fe2O3 + 2H2 → 4Fe3O4 + 2H2O | +32.7 kJ/mol |
| 2Fe3O4 + 2H2 → 6FeO + 2H2O | +127.6 kJ/mol |
| 6FeO + 6H2 → 6Fe + 6H2O | +171.4 kJ/mol |
| 2Fe3O4 + 8H2 → 6Fe + 8H2O | +299.0 kJ/mol |

The reaction of hydrogen and carbon dioxide to produce methane is commonly termed the Sabatier reaction. The reaction of hydrogen and carbon dioxide to produce carbon and steam is commonly termed the Bosch reaction.

Hydrogen predominates in the process gas and will therefore be the primary reductant. However, since carbon monoxide is formed from the reaction of hydrogen with carbon dioxide, and since even if carbon monoxide acts as reductant this merely regenerates carbon dioxide, the "primary" reductant can in all cases be considered to be hydrogen. Carbon is only removed from the chemical system by carburization reactions, since a carburized sponge iron product is removed at the outlet of the direct reduction shaft. Thus, the overall chemical system can be conceptualised as hydrogen being consumed in converting ore and carbon dioxide to iron and carbon monoxide respectively, with the carbon monoxide subsequently being consumed by carburization, and the ultimate products being water and carburized sponge iron, both of which are removed from the system.

### Direct Reduction

The direct reduction shaft may be of any kind commonly known in the art. By shaft, it is meant a solid-gas countercurrent moving bed reactor, whereby a burden of iron ore is charged at an inlet at the top of the reactor and descends by gravity towards an outlet arranged at the bottom of the reactor.

Reduction is typically performed at temperatures of from about 900 °C to about 1100 °C. The temperatures required are typically maintained by pre-heating of the process gases introduced into the reactor, for example using a preheater such as an electric preheater. Further heating of the gases may be obtained after leaving the pre-heater and prior to introduction into the reactor by exothermic partial oxidation of the gases with oxygen or air. Reduction may be performed at a pressure of from about 1 Bar to about 10 Bar in the DR shaft, preferably from about 3 Bar to about 8 Bar.

The iron ore burden typically consists predominantly of iron ore pellets, although some lump iron ore may also be introduced. The iron ore pellets typically comprise mostly hematite, together with further additives or impurities such as gangue, fluxes and binders. However, the pellets may comprise some other metals and other ores such as magnetite. Iron ore pellets specified for direct reduction processes are commercially available, and such pellets may be used in the present process. Alternatively, the pellets may be specially adapted for a carbon-lean reduction step, as in the present process.

In contrast to present-day commercial direct reduction processes, the make-up gas used to replenish the reducing gas comprises little or essentially no carburizing gas. By carburizing gas it is meant carbon-containing gases that are capable of directly carburizing the sponge iron, e.g. all non-fully oxidised carbon compounds, such as hydrocarbons or carbon monoxide. The make-up gas may for example comprise, consist essentially of, or consist of, hydrogen. Instead, the main carburizing effect in the present process is achieved by the carbon dioxide introduced as seal gas, which is converted to carbon monoxide and subsequently carburizes the sponge iron. However, in order to achieve suitable levels of carburization of the sponge iron, small amounts of additional carbon may be contained in the make-up gas as carbon dioxide and/or an auxiliary carburizing gas. The make-up gas comprises, consist essentially of, or consist of at least 80 vol%, preferably greater than 90 vol%, even more preferably greater than 95 vol% hydrogen gas (vol% determined at normal conditions of 1 atm and 0 °C). The balance may comprise, consist essentially of, or consist of carbon dioxide and/or auxiliary carburizing gas. If carbon dioxide and/or auxiliary carburizing gas constitute part of the make-up gas these may be introduced to the direct reduction shaft together with the hydrogen make-up gas. Alternatively, a proportion or all of the carbon dioxide and/or auxiliary carburizing gas constituting part of the make-up gas may be added to the direct reduction shaft separately from the main volume of make-up gas. For example, an auxiliary carburizing gas may be added to a carburizing or cooling zone of the direct reduction shaft.

The process gas is at least partially recycled, whereby top (spent) gas from the DR shaft may be cleaned and treated to remove by-products such as water and/or dust prior to reintroduction to the DR shaft. This recycled top gas may be mixed with fresh make-up gas prior to reintroduction into the reactor, or may be introduced separately from any fresh make-up gas supply.

Sponge iron is obtained as the product of reduction of the iron ore, and is discharged from the outlet at the bottom end of the direct reduction shaft. The shaft may have a cooling and discharge cone arranged at the bottom to allow the sponge iron to cool prior to discharge from the outlet.

### Sponge iron

The term crude iron is used herein to denote all irons produced for further processing to steel, regardless of whether they are obtained from a blast furnace (i.e. pig iron), or a direct reduction shaft (i.e. sponge iron). The sponge iron obtained at the outlet of the DR shaft is typically predominantly in the form of pellets, due to the structural integrity of the direct reduction pellets, as well as the conditions prevailing in the DR shaft. Such sponge iron is typically referred to as direct reduced iron (DRI). Depending on the process parameters, it may be provided as hot (HDRI) or cold (CDRI). Cold DRI may also be known as Type (B) DRI. DRI may be prone to re-oxidation and in some cases is pyrophoric. However, there are a number of known means of passivating the DRI. One such passivating means commonly used to facilitate overseas transport of the product is to press the hot DRI into briquettes. Such briquettes are commonly termed hot briquetted iron (HBI), and may also be known as type (A) DRI.

The sponge iron product obtained by the process herein may be an essentially fully metallized sponge iron, i.e. a sponge iron having a degree of reduction (DoR) greater than about 90%, such as greater than about 94% or greater than about 96%. Degree of reduction is defined as the amount of oxygen removed from the iron oxide, expressed as a percentage of the initial amount of oxygen present in the iron oxide. It is often not commercially favourable to obtain sponge irons having a DoR greater than about 96% due to reaction kinetics, although such sponge irons may be produced if desired.

By carburized sponge iron it is meant carbon-containing sponge iron. The carbon present in the sponge iron product may typically be in the form of cementite (Fe3C) and/or graphite. Graphite tends to dust and to be lost from the sponge iron prior to reaching the melt of the EAF. For this reason, it may be preferable if carbon is present in the sponge iron as cementite.

The carburized sponge iron may comprises from 0.1 to 5 percent carbon by weight, such as from 0.5 to 3 percent carbon by weight such as about 1 to 2 percent carbon by weight. It is typically desirable for further processing that the sponge iron has a carbon content of from 0.5 to 5 percent carbon by weight, preferably from 1 to 4 percent by weight, such as about 3 percent by weight, although this may depend on the ratio of sponge iron to scrap used in a subsequent EAF processing step. If desired, the carburized sponge iron product of the present process may subsequently be further carburized by other means prior to further processing.

### Gases

The hydrogen gas is obtained at least in part by electrolysis of water. If the water electrolysis is performed using renewable energy then this allows the provision of a reducing gas from renewable sources. The electrolytic hydrogen may be conveyed by a conduit directly from the electrolyser to the DR shaft, or the hydrogen may be stored upon production and conveyed to the DR shaft as required.

The present invention requires a source of carbon dioxide as seal gas. Some carbon dioxide may also be introduced as make-up gas in order to provide increased carburization of sponge iron. In order to avoid accumulation of inert gases in the process gas, the seal gas consists essentially of carbon dioxide, i.e. consists of carbon dioxide and impurities in the gas source. For example, it is preferable that the source of carbon dioxide is essentially pure carbon dioxide, e.g. 95 vol% carbon dioxide or greater, preferably 98 vol% or greater. The source of carbon dioxide may preferably be from a high-concentration source, preferably a high-concentration biogenic source. For example, concentrated "green" CO2 may be obtained as a by-product of bio-gas production by anaerobic digestion, or as a by-product of bioethanol production. If the carbon dioxide used in the process is from a renewable source then the process may be net negative with regard to CO2 emissions. However, even use of a source of carbon dioxide from a fossil source that otherwise would have been directly emitted means that the process may not result in any excess emission of CO2. An alternative means of providing carbon dioxide is to preheat the reducing gas prior to introduction into the direct reduction shaft using oxy-fuel combustion of biomass. The principle of oxy-fuel combustion is simple: the biomass is combusted using essentially pure oxygen as the oxidant. The resulting flue stream consists essentially of carbon dioxide and steam. The steam may be removed by simple condensation, providing an essentially pure source of carbon dioxide. Conventionally, the provision of essentially pure oxygen is an economic impediment to the utilization of oxy-fuel combustion. However, in the present case there may be a ready supply of oxygen available at low additional cost from water electrolysis, making oxy-fuel preheating of the reduction gas economically feasible.

The auxiliary carburizing gas may be any gas known or expected in the art to provide carburization. Gas in this respect refers to a substance that is gaseous at the high temperatures prevailing in the carburization reactor, although it may be liquid or solid at room temperature. Suitable carburizing gases include hydrocarbons such as methane, natural gas, LPG or petroleum, or other carbonaceous substances such as syngas, lower (C1-C6) alcohols, esters and ethers. The carburizing gas may be of fossil origin, but it is preferable that it is obtained partly or wholly from a renewable source in order to reduce net CO2 emissions. By renewable it is meant a resource that is naturally replenished on a human timescale. The high utilization of carbon present in the carburizing gas permits use of renewable carburizing gases, despite their relative scarcity and high cost as compared to fossil equivalents. Suitable renewable carburizing gases include biomethane, biogas, gas obtained from the pyrolysis or partial combustion of biomass, lower alcohols or ethers such as methanol, DME or ethanol derived from renewable feedstocks, or combinations thereof. Sulfur-containing carburizing gases may be used, as the sulfur is known to prevent nucleation of graphite and passivate the sponge iron product.

The composition of the carburizing gas may be chosen to suit the final carburized sponge iron to be obtained. The carburization reaction with hydrocarbons is relatively endothermic, leading to a relatively cool final product, whereas the reaction with CO-containing carburizing gases is more exothermic, leading to a hotter final product. This effect may be utilized to tailor the temperature of the final product obtained. For example, if a hot product is desired for briquetting (HBI), a gas comprising some partially oxidized carbon (e.g. in the form of CO, ketones, aldehydes) may be used, whereas if cold sponge iron (CDRI) is desired then biomethane may be used.

In considering the total quantities of carbon dioxide and/or auxiliary carburizing gas suitable to be added to the process gas, either as seal gas (carbon dioxide) or in the make-up gas (carbon dioxide and/or auxiliary carburizing gas), factors to consider are the degree of carburization desired, the effect on the added carbon on the water-gas shift equilibrium, and the effect the added carbon has on the reducing capacity of the reducing gas. For example, Excessive addition of carbon may result in significant accumulation of carbon dioxide in the process gas, potentially decreasing the reducing capacity of the reducing gas.

It is preferred that the carbon dioxide and any auxiliary carburizing gas used is derived from a renewable source, and in such case, the carbon in the sponge iron product will also derive from a renewable source. It can be determined whether the carbon in the sponge iron derives from a renewable source or a fossil source by radiocarbon dating of the sponge iron. Methods for sample preparation and radiocarbon dating of iron products are known in the art.

Carbon derived from fossil resources typically has a radiocarbon age of in excess of 35 000 years, whereas carbon derived from renewable sources is found to be "modern". Depending on the proportion of renewable carbon to fossil carbon in the sponge iron, which in turn depends on the proportion of renewable carbon to fossil carbon in the carbon dioxide and carburizing gas, the radiocarbon age of the sponge iron may range from about 35 000 years (if the carbon is exclusively fossil-derived) to "modern" (if the carbon is exclusively renewablederived). The process described herein, due to its excellent utilization of carbon, is capable of being performed in a commercially viable manner using carbon dioxide and optionally carburizing gas derived predominantly or essentially from renewable sources. Thus the resulting sponge iron product may have a radiocarbon age of less than 10 000 years before present, preferably less than 1 000 years, such as less than 100 years before present.

### Embodiments

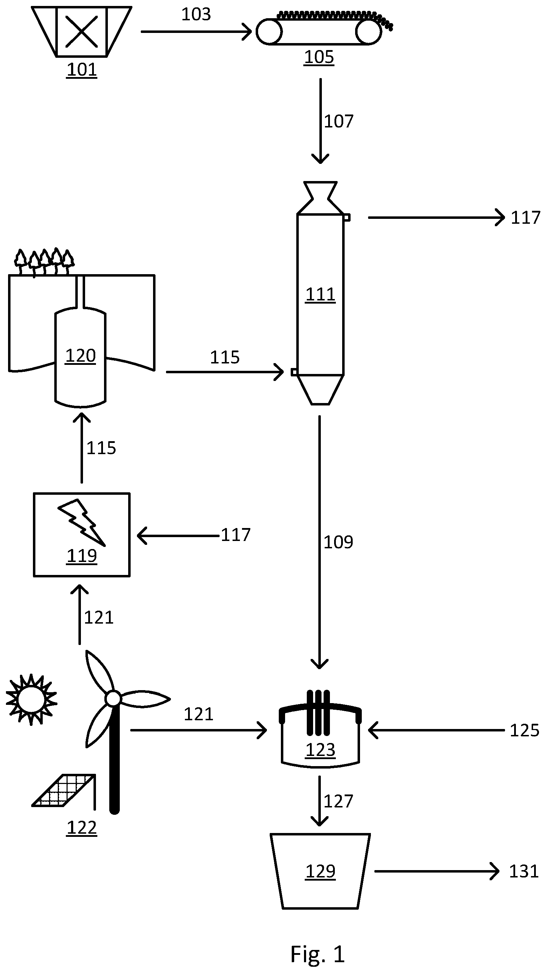

The invention will now be described in more detail with reference to certain exemplifying embodiments and the drawings. However, the invention is not limited to the exemplifying embodiments discussed herein and/or shown in the drawings, but may be varied within the scope of the appended claims. Furthermore, the drawings shall not be considered drawn to scale as some features may be exaggerated in order to more clearly illustrate certain features. Figure 1 schematically illustrates a prior art embodiment of the ore-based steelmaking value chain according to the Hybrit concept. The ore-based steelmaking value chain starts at the iron ore mine 101. After mining, iron ore 103 is concentrated and processed in a pelletizing plant 105, and iron ore pellets 107 are produced. These pellets, together with any lump ore used in the process, are converted to sponge iron 109 by reduction in a direct reduction shaft 111 using hydrogen gas 115 as the main reductant and producing water 117 as the main by-product. The hydrogen gas 115 is produced by electrolysis of water 117 in an electrolyser 119 using electricity 121 that is preferably primarily derived from fossil-free or renewable sources 122. The hydrogen gas 115 may be stored in a hydrogen storage 120 prior to introduction into the direct reduction shaft 111. The sponge iron 109 is melted using an electric arc furnace 123, optionally together with a proportion of scrap iron 125 or other iron source, to provide a melt 127. The melt 127 is subjected to further downstream secondary metallurgical processes 129, and steel 131 is produced. It is intended that the entire value-chain, from ore to steel may be fossil-free and produce only low or zero carbon emissions.

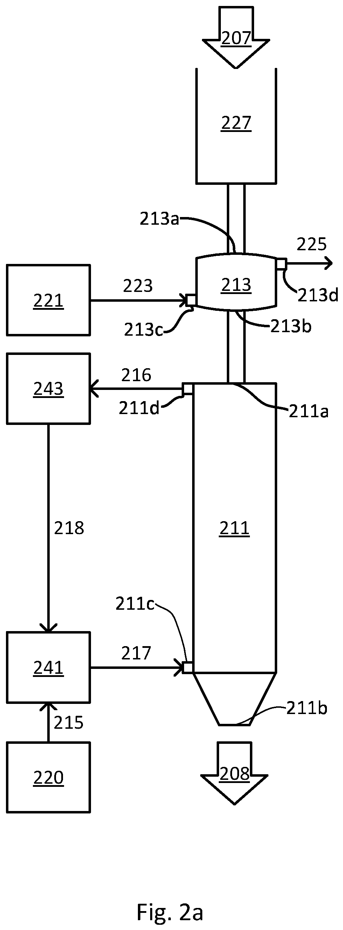

Figure 2a schematically illustrates an exemplifying embodiment of a system suitable for performing the process as disclosed herein. The system illustrated in Figure 2a is particularly suitable for direct reduction processes operating at elevated pressures (e.g. > 2 Bar).

A direct reduction shaft 211 is arranged with an inlet 211a for iron ore 207, an outlet 211b for discharging sponge iron 208, an inlet for reducing gas 211c and an outlet for top gas 211d. A pressurizable charge hopper 213 is arranged in communication with the inlet 211a to the direct reduction shaft 211. The pressurizable charge hopper 213 comprises an inlet 213a for iron ore 207, an outlet 213b for iron ore 207, a gas inlet 213c and a gas outlet 213d. The inlet 213a of the pressurizable charge hopper 213 is arranged in connection with an ore bin 227. The gas inlet 213c of the pressurizable charge hopper 213 is arranged in connection with a source of carbon dioxide 221.

In use, iron ore 207 from ore bin 227 is introduced into the pressurizable charge hopper 213. Once loaded with ore, the ore inlet 213a and outlet 213b are sealed and the hopper 213 is purged with a volume of carbon dioxide 223 from the source of carbon dioxide 221 in order to expel air from the hopper 213. Air mixed with carbon dioxide leaves the hopper 213 as purged gas 225. The purged gas mixture may be recycled to recuperate carbon dioxide if desired. Gas outlet 213d is then sealed and the hopper 213 is pressurized with carbon dioxide 223 to a pressure approximating the operating pressure of the direct reduction shaft 211. Once pressurized, the outlet 213b of the hopper 213 is opened to allow iron ore 207 to be charged to the inlet 211a of the direct reduction shaft 211. Carbon dioxide 223 is inevitably concomitantly introduced to the direct reduction shaft in the charging operation. The iron ore 207 charged to the direct reduction shaft 211 progressively passes through the shaft to be discharged at outlet 211b. During its passage through the shaft 211 the ore 207 is reduced by reducing gas 217 in a counter-current flow, such that sponge iron 208 is obtained at the discharge outlet 211b of the reactor 211.

Make-up gas 215 is supplied from a source of make-up gas 220, such as a hydrogen gas store or water electrolyser. The make-up gas 215 is mixed with treated top gas 218 to form reducing gas 217. The reducing gas 217 is passed through a pre-heater 241 prior to introduction into the direct reduction shaft 211. The top gas 216 exiting outlet 211d is passed through a plurality of treatment apparatuses 243 in order to prepare the gas for re-introduction to the DR shaft 211. The plurality of treatment apparatuses may include a cleaning step, such as passage through an electrostatic precipitator to remove solids from the gas, heat exchange with other process gases such as the reducing gas 217, and separation of water. The treated top gas 218 is mixed with the make-up gas 215 and passed through the pre-heater 241 prior to reintroduction into the direct reduction shaft 211 through inlet 211c. The temperature of the gases entering inlet 211c may be further increased by partial oxidation. In such a case, a supply of oxygen (not shown) will be arranged between the pre-heater 241 and inlet 211c.

The carbon dioxide 223 introduced to the direct reduction shaft with the ore 207 will circulate in the process gases where, without wishing to be bound by theory, it will first be converted by reaction with hydrogen to carbon monoxide and then be taken up as carbon (e.g. graphite or cementite) in the sponge iron. Thus, the carbon dioxide 223 will be passively removed from circulation and will not accumulate in the process.

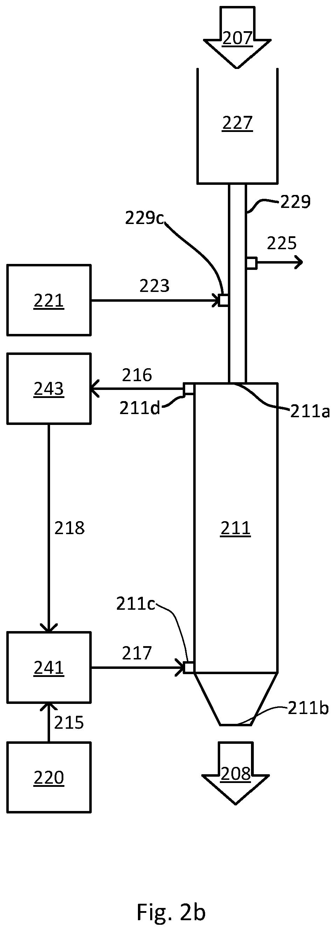

Figure 2b schematically illustrates a similar process system (non-claimed) to that illustrated in Figure 2a, with the difference that the system is particularly suitable for direct reduction processes operating at near-atmospheric pressures (e.g. ≤ 2 Bar). In this system, iron ore 207 is charged to the inlet 211a of the direct reduction shaft 211 via a seal leg 229. Carbon dioxide 223 is provided to the seal leg 229 at a seal gas inlet 229c at a pressure in excess of the operating pressure of the direct reduction shaft 211 and a mixture of carbon dioxide and air is expunged as purged gas 225. In this manner, iron ore 207 being charged to the inlet 211a of the direct reduction shaft 211 will be stripped of air, and process gases from the direct reduction shaft 211 will be prevented from exiting the shaft via the seal leg 229. However, such an arrangement also inevitably leads to the introduction of carbon dioxide 223 into the direct reduction shaft 211 together with ore 207. In other aspects, the operation of the system and process is similar to that described in Figure 2a. Again, it may be possible to recycle the purged gas 225.

Although not illustrated, the process systems illustrated in Figures 2a and 2b also comprise a carburized sponge iron discharging arrangement, arranged at the discharge outlet 211b of the direct reduction shaft. Such discharging arrangements are known in the art and may comprise a pressurized discharge hopper, or a seal leg and discharge bin. Such discharging arrangements function in a similar manner to the ore charging arrangements described in conjunction with Figures 2a and 2b.

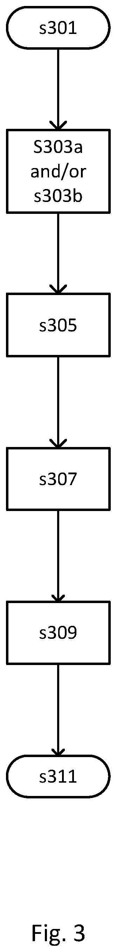

Figure 3 is a flow chart schematically illustrating an exemplifying embodiment of the process disclosed herein. Step s301 denotes the start of the process. In step s303a iron ore is charged into a direct reduction shaft, whereby carbon dioxide as seal gas is inevitably introduced into the direct reduction shaft together with the iron ore. In step s305 a top gas is removed from the direct reduction shaft. In step s307 a proportion of the top gas is recycled and mixed with a make-up gas to form a reducing gas. In step s 309 the reducing gas is introduced into the direct reduction shaft in countercurrent flow to the iron ore in order to reduce the iron ore and produce carburized sponge iron. Step s311 denotes the end of the process. Alternatively, or in addition, another step, step s303b may replace or complement step s303a. In step s303b carburized sponge iron is discharged from the direct reduction shaft, whereby carbon dioxide as seal gas is introduced into the direct reduction shaft in conjunction with discharge of the carburized sponge iron.

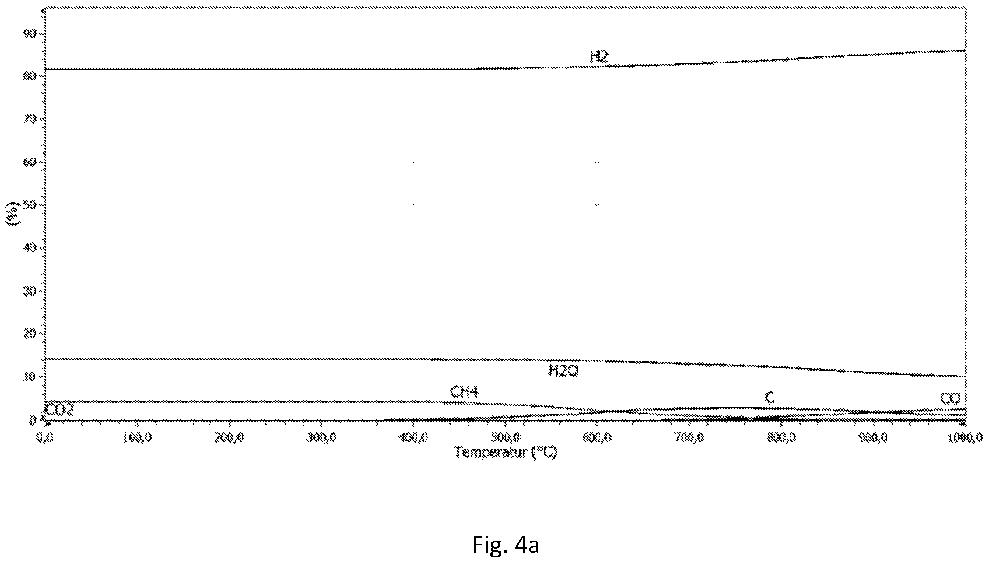

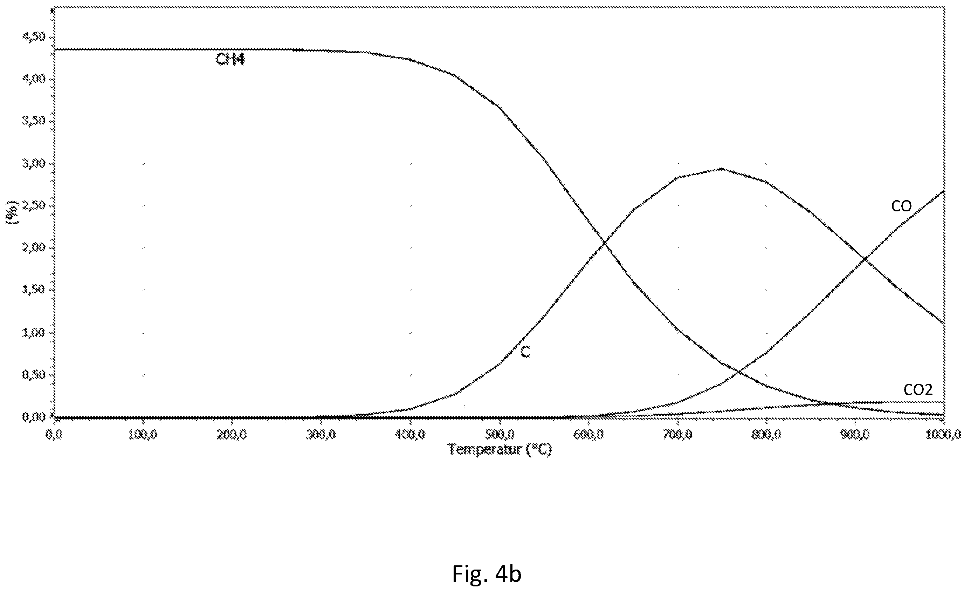

Figures 4a and 4b illustrate an equilibrium composition formed using an initial gas composition of: H2: 91 %; CO2: 4%; and H2O: 5% (by volume) at a pressure of 4 Bar. The equilibrium is calculated using HSC Equilibrium software from Outotec. Figure 4a illustrates all components, whereas Figure 4b focusses on the carbonaceous components of the mixture. It can be seen that at relatively low temperatures (< approx. 600 ° C) methane dominates, at intermediate temperature (approx. 600 - 900 °C) carbon (graphite formation) dominates, whereas at temperatures in excess of approx. 900 °C carbon monoxide dominates. Carbon dioxide is not favoured at any of the equilibrium conditions investigated, although at low temperature it can be assumed that it will be kinetically favoured since it is a component of the initial gas mixture. It should be noted that the prevailing temperature at the reducing gas inlet of a direct reduction shaft is typically in excess of 950 °C, and therefore carbon monoxide will be favoured by equilibrium. Once formed, the carbon monoxide will participate in carburization and be removed from the process in the manner previously described.

## Claims

1. A process for the production of carburized sponge iron (208) from iron ore (207), the process comprising the steps:
- charging (s303a) iron ore into a direct reduction shaft (211), and/or discharging (s303b) carburized sponge iron (208) from the direct reduction shaft (211), whereby a seal gas (223) is introduced into the direct reduction shaft in conjunction with charging the iron ore and/or discharging the carburized sponge iron;
- removing (s305) a top gas (216) from the direct reduction shaft;
- recycling (s307) a proportion of the top gas and mixing with a make-up gas (215) to form a reducing gas (217); and
- introducing (s309) the reducing gas into the direct reduction shaft in countercurrent flow to the iron ore in order to reduce the iron ore and produce carburized sponge iron;
**characterized in that**
the seal gas consists essentially of carbon dioxide,
the make-up gas comprises greater than 80 vol% hydrogen gas, wherein the hydrogen gas is produced by electrolysis of water, and
wherein the direct reduction shaft operates at a pressure of greater than 2 Bar, and wherein the seal gas and the iron ore are introduced into the direct reduction shaft via a pressurizable charge hopper (213) arranged at an inlet (211a) of the direct reduction shaft.

2. A process according to claim 1, wherein the make-up gas consists essentially of hydrogen and optionally carbon dioxide.

3. A process according to any one of the preceding claims, wherein the recycled top gas is not passed through an external CO2 reformer.

4. A process according to any one of the preceding claims, wherein no top gas is flared.

5. A process according to any one of the preceding claims, wherein the carbon dioxide is obtained as a by-product of biofuel production.

6. A process according to any one of the preceding claims, wherein recycling a proportion of the top gas comprises steps of removing water and dust from the top gas.

7. A system for the production of carburized sponge iron, the system comprising:
- an electrolyser (220) arranged to produce hydrogen (215) from the electrolysis of water;
- a direct reduction shaft (211);
- an iron ore charging arrangement;
- a carburized sponge iron discharging arrangement; and
- a source of carbon dioxide (221),
wherein the source of carbon dioxide is arranged in fluid connection with the iron ore charging arrangement and/or the carburized sponge iron discharging arrangement, wherein the iron ore charging arrangement comprises a pressurizable charge hopper (123), wherein the pressurizable charge hopper comprises a seal gas inlet (213c), and wherein the seal gas inlet is arranged in fluid connection with the source of carbon dioxide.

8. A system according to claim 7, wherein the system does not comprise a CO2 reformer.

9. A system according to any one of claims 7-8, wherein the system does not comprise a device for CO₂ capture.

## Patentansprüche

1. Verfahren zur Herstellung von aufgekohltem Eisenschwamm (208) aus Eisenerz (207), wobei das Verfahren die folgenden Schritte umfasst:
- Laden (s303a) von Eisenerz in einen direkten Reduktionsschacht (211) und/oder Entladen (s303b) von aufgekohltem Eisenschwamm (208) aus dem direkten Reduktionsschacht (211), wobei ein Dichtgas (223) in den direkten Reduktionsschacht in Verbindung mit dem Laden des Eisenerzes und/oder dem Entladen des aufgekohlten Eisenschwamms eingebracht wird;
- Entfernen (s305) eines Gichtgases (216) aus dem direkten Reduktionsschacht;
- Wiederverwerten (s307) eines Teils des Gichtgases und Mischen mit einem Frischgas (215), um ein Reduktionsgas (217) zu bilden; und
- Einbringen (s309) des Reduktionsgases in den direkten Reduktionsschacht im Gegenstrom zu dem Eisenerz, um das Eisenerz zu reduzieren und aufgekohlten Eisenschwamm herzustellen;
**dadurch gekennzeichnet, dass**
das Dichtgas im Wesentlichen aus Kohlenstoffdioxid besteht,
das Frischgas mehr als 80 Vol.-% Wasserstoffgas umfasst, wobei das Wasserstoffgas durch Elektrolyse von Wasser hergestellt wird, und
wobei der direkte Reduktionsschacht bei einem Druck von mehr als 2 bar betrieben wird und wobei das Dichtgas und das Eisenerz über einen unter Druck setzbaren Füllwagen (213), der an einem Einlass (211a) des direkten Reduktionsschachts angeordnet ist, in den direkten Reduktionsschacht eingebracht wird.

2. Verfahren nach Anspruch 1, wobei das Frischgas im Wesentlichen aus Wasserstoffgas und optional Kohlenstoffdioxid besteht.

3. Verfahren nach einem der vorhergehenden Ansprüche, wobei das wiederverwertete Gichtgas nicht durch einen externen CO2-Aufbereiter geleitet wird.

4. Verfahren nach einem der vorhergehenden Ansprüche, wobei kein Gichtgas verbrannt wird.

5. Verfahren nach einem der vorhergehenden Ansprüche, wobei das Kohlenstoffdioxid als Nebenprodukt bei der Herstellung von Biokraftstoff erlangt wird.

6. Verfahren nach einem der vorhergehenden Ansprüche, wobei das Wiederverwerten eines Teils des Gichtgases Schritte des Entfernens von Wasser und Staub aus dem Gichtgas umfasst.

7. System zur Herstellung von aufgekohltem Eisenschwamm, wobei das System Folgendes umfasst:
- einen Elektrolyseur (220), der dazu angeordnet ist, Wasserstoff (215) anhand der Elektrolyse von Wasser herzustellen;
- einen direkten Reduktionsschacht (211);
- eine Anordnung zum Laden von Eisenerz;
- eine Anordnung zum Entladen von aufgekohltem Eisenschwamm;
und
- eine Quelle für Kohlenstoffdioxid (221),
wobei die Quelle für Kohlenstoffdioxid in Fluidverbindung mit der Anordnung zum Laden von Eisenerz und/oder der Anordnung zum Entladen von aufgekohltem Eisenschwamm angeordnet ist, wobei die Anordnung zum Laden von Eisenerz einen unter Druck setzbaren Füllwagen (123) umfasst, wobei der unter Druck setzbare Füllwagen einen Dichtgaseinlass (213c) umfasst und wobei der Dichtgaseinlass in Fluidverbindung mit der Quelle für Kohlenstoffdioxid angeordnet ist.

8. System nach Anspruch 7, wobei das System keinen CO2-Aufbereiter umfasst.

9. System nach einem der Ansprüche 7-8, wobei das System keine Vorrichtung zur CO₂-Abscheidung umfasst.

## Revendications

1. Procédé de production de fer spongieux cémenté (208) à partir de minerai de fer (207), le procédé comprenant les étapes consistant à :
- charger (s303a) le minerai de fer dans un arbre de réduction directe (211), et/ou décharger (s303b) le fer spongieux cémenté (208) à partir de l'arbre de réduction directe (211), un gaz d'étanchéité (223) étant introduit dans l'arbre de réduction directe en conjonction avec le chargement du minerai de fer et/ou la décharge du fer spongieux cémenté ;
- éliminer (s305) un gaz de tête (216) de l'arbre de réduction directe ;
- recycler (s307) une partie du gaz de tête et le mélanger avec un gaz d'appoint (215) pour former un gaz réducteur (217) ; et
- introduire (s309) le gaz réducteur dans l'arbre de réduction directe à contre-courant du minerai de fer afin de réduire le minerai de fer et de produire du fer spongieux cémenté ;
**caractérisé en ce que**
le gaz d'étanchéité est constitué essentiellement de dioxyde de carbone,
le gaz d'appoint comprend plus de 80 % en volume d'hydrogène gazeux, l'hydrogène gazeux étant produit par électrolyse de l'eau, et
l'arbre de réduction directe fonctionnant à une pression supérieure à 2 bars, et le gaz d'étanchéité et le minerai de fer étant introduits dans l'arbre de réduction directe via une trémie de charge pressurisable (213) disposée à une entrée (211a) de l'arbre de réduction directe.

2. Procédé selon la revendication 1, dans lequel le gaz d'appoint est constitué essentiellement d'hydrogène et éventuellement de dioxyde de carbone.

3. Procédé selon l'une quelconque des revendications précédentes, dans lequel le gaz de tête recyclé ne passe pas par un reformeur de CO2 externe.

4. Procédé selon l'une quelconque des revendications précédentes, dans lequel aucun gaz de tête n'est brûlé.

5. Procédé selon l'une quelconque des revendications précédentes, dans lequel le dioxyde de carbone est obtenu en tant que sous-produit de la production de biocarburant.

6. Procédé selon l'une quelconque des revendications précédentes, dans lequel le recyclage d'une partie du gaz de tête comprend des étapes d'élimination de l'eau et de la poussière du gaz de tête.

7. Système de production de fer spongieux cémenté, le système comprenant :
- un électrolyseur (220) agencé pour produire de l'hydrogène (215) à partir de l'électrolyse de l'eau ;
- un arbre de réduction directe (211) ;
- un agencement de chargement de minerai de fer ;
- un agencement de décharge de fer spongieux cémenté ; et
- une source de dioxyde de carbone (221),
dans lequel la source de dioxyde de carbone est disposée en connexion fluidique avec l'agencement de chargement de minerai de fer et/ou l'agencement de décharge de fer spongieux cémenté, dans lequel l'agencement de chargement de minerai de fer comprend une trémie de charge pressurisable (123), dans lequel la trémie de charge pressurisable comprend une entrée de gaz d'étanchéité (213c), et dans lequel l'entrée de gaz d'étanchéité est disposée en connexion fluidique avec la source de dioxyde de carbone.

8. Système selon la revendication 7, dans lequel le système ne comprend pas de reformeur de CO2.

9. Système selon l'une quelconque des revendications 7 à 8, dans lequel le système ne comprend pas de dispositif de capture de CO₂.
